# EUROPÄISCHE PATENTSCHRIFT

(11) **EP 0 719 465 B1**
(45) Veröffentlichungstag und Bekanntmachung des Hinweises auf die Patenterteilung: **27.05.1998**
(21) Anmeldenummer: 94927512.7
(22) Anmeldetag: 30.08.1994
(51) Int. Cl.: H01R 39/26, H01R 39/40

(54) **KOHLEBÜRSTE FÜR EINEN ELEKTROMOTOR**
CARBON BRUSH FOR ELECTRIC MOTORS
BALAI EN CHARBON POUR MOTEURS ELECTRIQUES

(30) Priorität: 03.09.1993 DE 4329753
(43) Veröffentlichungstag der Anmeldung: 03.07.1996
(73) Patentinhaber: ITT Automotive Europe GmbH, 60488 Frankfurt (DE)
(72) Erfinder: BRUHN, Rainer, D-76189 Karlsruhe (DE)
(86) Internationale Anmeldenummer: EP9402865
(87) Internationale Veröffentlichungsnummer: WO9506965

(56) Entgegenhaltungen:
- EP-A- 0 076 403
- WO-A-89/11170
- DE-A- 3 022 991
- DE-A- 3 148 581
- DE-A- 3 920 047
- US-A- 2 206 366

## Beschreibung

Die Erfindung bezieht sich auf eine Kohlebürste für einen Elektromotor. Derartige Kohlenbürsten sind stabförmig ausgebildet und im Querschnitt im wesentlichen rechteckig. Der Stab weist an seinem einen Ende eine vordere Stirnfläche auf, die an einen Kollektor angelegt wird. An seinem anderen Ende weist der Stab eine hintere Stirnfläche auf, an die eine Feder abgestützt wird, die die vordere Stirnfläche gegen den Kollektor drückt.

Die Kohlebürste wird in einem Köcher geführt, dessen Innenquerschnitt den gleichen Querschnitt aufweist, wie die Kohlebürste selbst, wobei aber im Regelfall ein relativ großes Spiel vorgesehen ist. Ein zu kleines Spiel würde eine zu hohe Anforderung an die Genauigkeit der Herstellung des Köchers stellen. Der Köcher wird im allgemeinen auf einer Kohlehalterplatte befestigt, die sich senkrecht zur Achse des Kollektors erstreckt. Der Köcher selbst steht wiederum senkrecht auf der Kohlehalterplatte, so daß die Seitenflächen der Kohlebürsten parallel zur Achse des Kollektors verlaufen.

Üblicherweise weist der Kollektor an seinem Umfang mehrere Lamellen auf, die durch Schlitze voneinander getrennt sind. Lamellen und Schlitze verlaufen parallel zur Kollektorachse. Diese Anordnung hat zur Folge, daß die Kante zwischen der vorderen Stirnfläche der Kohle und der Seitenfläche einer Kohle über ihre gesamte Länge gleichzeitig über einen Schlitz geführt wird. Bei einem sich drehenden Kollektor wiederholt sich dieser Vorgang in rascher Folge. Es ist ohne weiteres ersichtlich, daß bei diesem vorgang Geräusche entstehen, wie das bei einer Ratsche der Fall ist. Gleichzeitig werden Flatterbewegungen der Kohle innerhalb des Köchers induziert, die ebenfalls Geräusche verursachen.

Aus der DE 30 92 991 A1 ist eine Kohlebürste bekannt, die stabförmig ausgebildet ist und in allen Querschnitten senkrecht zur Längsachse eine Trapezform aufweist. Die Seitenwände der Bürste sind somit gegenüber der unteren und der oberen Fläche geneigt. Dies setzt voraus, daß eine entsprechend konturierte Führung vorhanden sein muß, die aber entsprechend schwierig herzustellen ist.

In der WO 89/11170 ist eine Kohlebürste beschrieben, die für einen flachen Kommutator vorgesehen ist, wobei ebenfalls zwei zueinander geneigte Seitenflächen vorgesehen sind, so daß die Kohlebürste in allen Querschnitten parallel zur vorderen Fläche, die den Kommutator kontaktiert, trapezförmig ausgebildet ist. Diese Anordnung wurde gewählt, um die Kohlebürste aus dem Träger in Richtung auf die breite Seitenfläche herausziehen zu können.

Die Erfindung geht von der Aufgabe aus, die Kohlebürsten derart zu gestalten, daß bei ihrem Einsatz in einem Elektromotor möglichst wenig Geräusche entstehen. Damit wird der Elektromotor besonders geeignet für den Einsatz im Fahrzeugbau, z.B. für den Antrieb von Wischern oder anderer Anlagen im Fahrzeug, die selbsttätig arbeiten.

Zur Lösung der Aufgabe schlägt die Erfindung eine Kohlebürste mit den Merkmalen des Anspruchs 1 vor. Die Tatsache, daß die äußere Kontur eines Querschnitts nahe der vorderen Stirnfläche trapezförmig ist hat zur Folge, daß die Kante zwischen der vorderen Stirnfläche und der Seitenfläche schräg verläuft, so daß die Kante beim Überfahren eines Schlitzes auf dem größten Teil ihrer Länge von den jeweils benachbarten Lamellen unterstützt wird. Nur ein kleiner Bereich der Kante befindet sich über einem Schlitz. Es ist ohne weiteres ersichtlich, daß der aus dem Stand der Technik bekannte Ratscheneffekt hier nicht auftreten kann.

Dabei hat sich herausgestellt, daß es vollkommen ausreicht die Kohlenbürste nur im vorderem Bereich auf diese Weise zu gestalten. Im hinteren Bereich kann ein rechteckförmiger Querschnitt beibehalten werden, der dafür sorgt, daß die Kohle im Köcher geführt wird. Es reicht im allgemeinen vollkommen aus, wenn die Kohle etwa über 10% ihrer Länge im Querschnitt trapezförmig ist, wobei sich die Schräge der Seitenkanten nach hinten hin mehr und mehr verringert, so daß ein langsamer Übergang vom trapezförmigen Bereich in den rechteckigen Bereich stattfindet.

Wie schon erläutert beruht die Geräuschreduzierung zum einen auf die Vermeidung des Ratscheneffekts beim Gleiten der Kohle über die Kollektorfläche. Zum anderen werden auf diese Weise Flatterbewegungen der Kohle innerhalb des Köchers in nur geringerem Maße induziert. Eine Maßnahme, um die verbleibenden Flatterbewegungen und Vibrationen zu unterbinden, besteht darin, die Kohle innerhalb des Köchers zu verkanten. Dies kann auf verschiedenen Wegen erreicht werden. Zum einen kann die hintere Stirnfläche einerseits gegen die obere und untere Fläche der Kohle geneigt werden und andererseits gegen die Seitenflächen geneigt werden. Die Federkraft greift dann nicht mehr gradlinig an, sondern leicht schräg, so daß eine Seitenkraft ausgeübt wird, die die Kohle gegen die Seitenwandungen des Köchers bzw. in eine Ecke des Köchers drängt. Eine entsprechende Schrägstellung ist auch für die vordere Stirnfläche vorgesehen, so daß die Kohle im Längsschnitt einen in etwa parallelogrammförmige Kontur aufweist. Eine Verkantung der Kohle innerhalb des Köchers wird auch durch die folgende Maßnahme erzielt. Die vordere Stirnfläche ist entsprechend der Zylinderform des Kollektors zylinderförmig ausgebildet. Die Achse für die Zylinderform der vorderen Stirnseite kann nun so gelegt werden, daß sie einen Winkel einschließt mit einer Senkrechten auf der oberen bzw. unteren Seite der Kohle. Diese Kippung der Achse der Zylinderkontur der vorderen Stirnfläche hat zur Folge, daß die Kohle sich entsprechend um ihre Längsachse dreht, damit die Zylinderkontur der vorderen Stirnfläche passend auf der Zylinderoberfläche des Kollektors aufliegt. Dies führt zu einer Verkantung der Kohle im Köcher, wodurch in effektiver Weise Flatterbewegungen unterbunden werden.

Um die Erfindung zu verdeutlichen, soll sie anhand der folgenden neun Figuren erläutert werden.
- Fig. 1: zeigt einen Querschnitt durch die Anordnung aus Kollektor und Kohle mit Köcher
- Fig. 2: zeigt eine seitliche Ansicht von Kollektor und Kohle
- Fig. 3: zeigt eine Abwicklung der Kollektoroberfläche sowie die Konturen der vorderen Stirnfläche der Kohle und des Köchers
- Fig. 4: zeigt ebenfalls eine Abwicklung
- Fig. 5: zeigt einen Längsschnitt durch die Kohle
- Fig. 6: zeigt eine Seitenansicht der Kohle
- Fig. 7: eine Draufsicht auf die obere Fläche
- Fig. 8: eine Draufsicht auf die vordere Stirnfläche
- Fig. 9: eine Draufsicht auf die hintere Stirnfläche

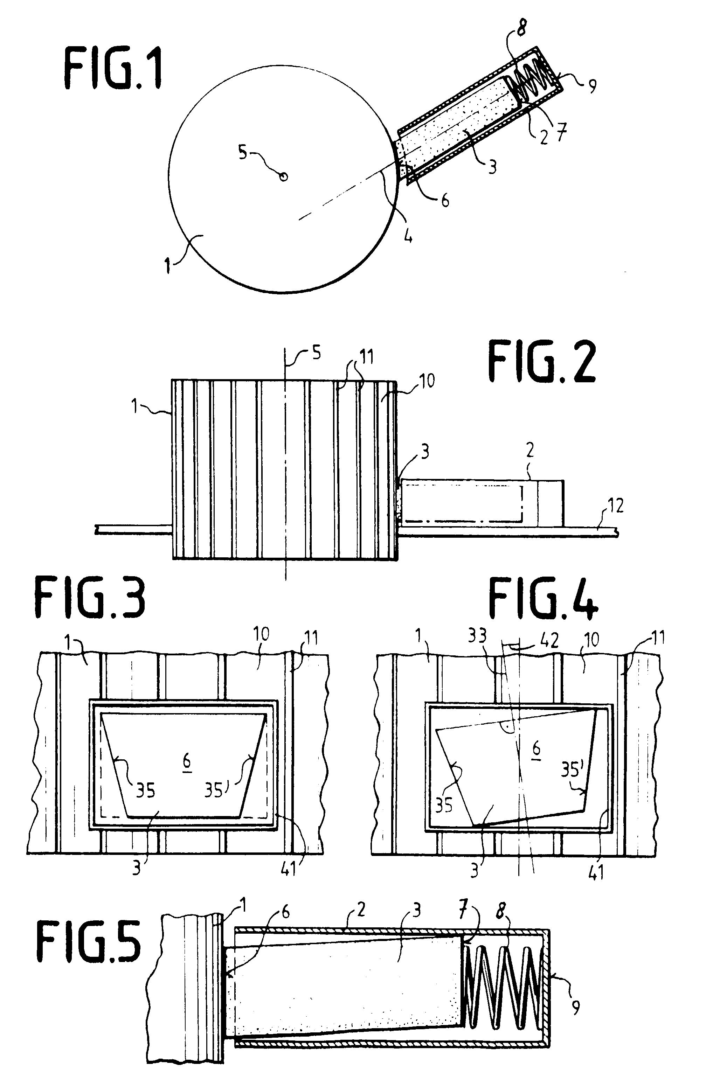

In Fig. 1 ist mit 1 ein Kollektor bezeichnet. Dieser ist zylinderförmig und befindet sich auf der Achse eines Elektromotors. In einem Köcher 2 ist eine Kohle 3 bzw. Kohlebürste geführt. Köcher und Kohle weisen jeweils einen rechteckigen bzw. quadratischen Querschnitt auf, wobei der Köcher derart angeordnet ist, daß die Längsachse 4 der Kohle 3 in einem Abstand an der Drehachse 5 des Kollektors 1 vorbeiläuft.

Die vordere Stirnfläche 6 der Kohle 3 ist an der Kollektoroberfläche angelegt. Sie weist die gleiche zylinderförmige Kontur auf wie der Kollektor. An der hinteren Stirnfläche 7 der Kohle 3 ist eine Feder 8 abgestützt, die sich mit ihrer anderen Seite an dem hinteren Abschluß 9 des Köchers abstützt. Die Feder 8 drückt die Kohle 3 gegen die Zylinderoberfläche des Kollektors 1, so daß ein guter elektrisch leitender Kontakt zwischen dem Kollektor 1 und der Kohle 3 hergestellt wird.

Die Fig. 2 zeigt eine Seitenansicht. Man erkennt den Kollektor 1 mit den Lamellen 10 und den dazwischen angeordneten Schlitzen 11. Die Lamellen 10 und die Schlitze 11 erstrecken sich parallel zur Drehachse 5 des Kollektors 1. Man erkennt weiterhin, daß der Köcher 2 auf einer Kohlenhalterplatte 12 angeordnet ist, die senkrecht zur Achse 5 des Kollektors 1 angeordnet ist. D.h., daß die Längsachse 4 der Kohle 3 in einer Ebene senkrecht zur Achse 5 des Kollektors 1 verläuft.

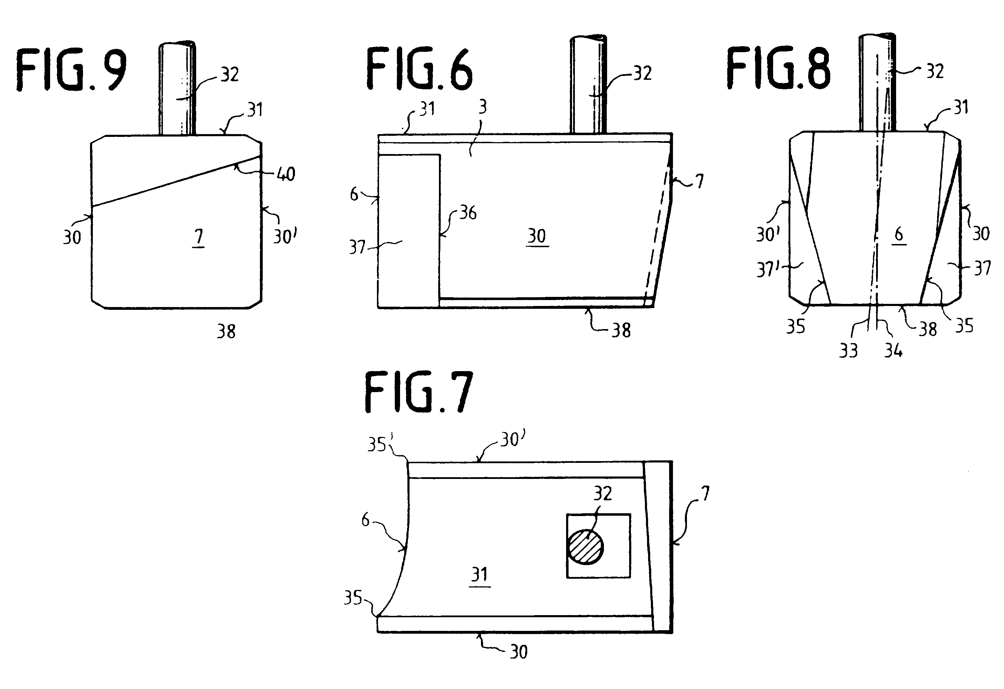

Die Fig. 6 bis 9 zeigen verschiedene Ansichten einer Kohle, die in einem Köcher 2 untergebracht werden kann. Fig. 6 zeigt die Sicht auf eine Seitenfläche 30 einer Kohle 3. Im Montagezustand steht diese Fläche senkrecht zur Kohlenhalterplatte 12.

Fig. 7 zeigt eine Draufsicht auf die Kohle und damit die obere Fläche 31 der Kohle. Diese verläuft parallel zur Kohlenhalterplatte. Aus der oberen Fläche 31 der Kohle 3 ragt eine Litze 32 heraus. Über die Litze 32 wird Strom zur Kohle 3 und über die Lamellen 10 zum Anker des Elektromotors geleitet.

Fig. 8 zeigt die Sicht auf die vordere Stirnfläche 6 und Fig. 9 auf die hintere Stirnfläche 7.

In der Draufsicht gemäß Fig. 7 erkennt man, daß die vordere Stirnfläche 6 entsprechend der Zylinderform des Kollektors gekrümmt ist. Entsprechend dem Versatz des Köchers gegenüber der Achse 5 des Kollektors 1 (siehe Fig. 1) ist die Stirnfläche 6 gegenüber der Seitenfläche 30 geneigt.

Wie Fig. 8 zeigt, soll die Achse 33 der zylinderförmigen Krümmung der Stirnfläche 6 gegenüber einer Senkrechten 34 zur oberen Fläche 31 um ca. 3° geneigt sein. Der Effekt dieser Maßnahme soll weiter unten beschrieben werden.

Gleichzeitig sind die Seitenkanten 35,35' im Übergang zwischen der vorderen Stirnfläche 6 und den Seitenflächen 30, 30' geneigt. Der Winkel beträgt ca. +15° bzw. -15° gegenüber einer Senkrechten zur oberen Fläche 31. Insgesamt ergibt sich damit ein in etwa trapezförmiger Querschnitt der vorderen Fläche 6. Diese maximale Schrägstellung von ca. 15° liegt aber nur in der vorderen Fläche bei einer noch nicht abgeschliffenen Kohle vor. Legt man Schnitte an, die hinter der vorderen Fläche liegen, so wird die Schrägstellung der Kanten 35, 35' kleiner, bis ein Querschnitt erreicht ist, der im wesentlichen rechteckförmig ist.
Der rechteckförmige Querschnitt wird, gemessen am Neuzustand der Kohle, schon kurz nach der vorderen Stirnfläche erreicht, nämlich auf einer Länge von ca. 10% der Gesamtlänge der Kohle im Neuzustand.

Dies ist mit der Kante 36 angedeutet, die den Bereich abgrenzt, in der der Querschnitt durch die Kohle trapezförmig ist. Auf diese Weise sind beidseitig der Stirnfläche schräge Flächen 37, 37' ausgebildet, die einerseits gegenüber der Seitenfläche 30 bzw. 30' und andererseits gegenüber der Stirnfläche 6 geneigt sind.

Die hintere Stirnfläche 7 ist - wie der Fig. 6 zu entnehmen ist - ebenfalls geschrägt. Sie ist gegenüber der Bodenfläche 38 geneigt. Mit einer gedachten senkrechten Stirnfläche schließt sie einen Winkel von ca. 10° ein. Wie aus der Draufsicht gemäß Fig. 7 zu erkennen ist, ist die hintere Stirnfläche 7 gleichzeitig leicht zu einer Seitenfläche hin geneigt. Diese Neigung führt in die Richtung, daß die entsprechend geneigte Fläche der vorderen Stirnfläche einen Winkel mit der geneigten hinteren Stirnfläche einschließt. Hintere und vordere Stirnfläche sind somit in der Draufsicht gemäß Fig. 7 gegeneinander gekippt.

Durch die Kippung der Fläche gegen die Bodenfläche und die Neigung gegenüber der Seitenfläche verläuft die obere Begrenzungskante 40 der schrägen Flächen mit dem senkrechten Teil der hinteren Stirnfläche 7 schräg gegenüber einer gedachten Mittelsenkrechten.

Die in den Fig. 6 bis 9 beschriebene Ausbildung der Kohle hat die folgende Wirkung. Dies ist sehr gut auf Fig. 3 zu erkennen. Diese zeigt eine Abwicklung der Seitenfläche des Kollektors und die an ihr angrenzenden Flächen der Kohle 3 sowie des Köchers 2 . Der Köcher 2 bildet im Querschnitt etwa ein Quadrat dessen Seitenwände 41 parallel zu den Schlitzen im Kollektor 1 verlaufen. Die Kohle 3 ist in den Köcher geführt und stößt mit ihrer vorderen Stirnflächen 6 an den Kollektor an. Diese Fläche ist, wie auch aus Fig. 8 zu erkennen ist, trapezförmig. Dies hat zur Folge, daß die Seitenkanten 35, 35' unter einem Winkel zu den Schlitzen 11 zwischen den Lamellen 10 verlaufen. Dies wiederum hat zur Folge, daß, wie aus Fig. 3 zu erkennen ist, die Kanten 35, 35' stets über einen Großteil ihrer Länge von den Lamellen unterstützt sind.

Die Fig. 4 entspricht in ihrer Darstellung der Fig. 3. Es wird das Ergebnis verdeutlicht, daß sich ergibt, wenn die Achse 33 der Zylinderkontur der vorderen Stirnfläche gegenüber einer Senkrechten 34 zur der oberen bzw. unteren Fläche der Kohle gekippt ist.

Die Kohle wird sich im Köcher soweit drehen, daß die Achse 33 der gekrümmten Oberflächenkontur der Stirnfläche 6 in Übereinstimmung steht mit der Achse 5 des Kollektors. Dies geht nur, wenn die Kohle um ihre Längsachse um den entsprechenden Winkel 42 gekippt wird. Dies wiederum hat zur Folge, daß jeweils eine Kante zwischen den Seitenflächen 30, 30' und der oberen bzw. unteren Fläche 31, 38 gegen die obere bzw. untere Fläche des Köchers anschlägt. Dadurch wird die Kohle im Köcher verklemmt.

Da die Abschrägungen der Seitenfläche ca. 15° beträgt und die Neigung der Achse ca. 3°, wird sich die Neigung der Seitenkanten 33, 35' gegenüber den Schlitzen 11 auf der einen Seite 35 etwas vergrößern auf der anderen Seite 35' etwas verkleinern. Damit wird auch im ungünstigsten Fall eine Schrägstellung der Seitenkante gegenüber der Lamellen 10 verbleiben.

Mit der Fig. 5 soll die Wirkung der Abschrägung der hinteren Stirnfläche 7 erläutert werden. Die Kohle 3 wird sich so im Köcher 2 ausrichten, daß die hintere Stirnfläche 7 in etwa senkrecht im Köcher steht. Dies hat zur Folge, daß die Kohle der Länge nach gekippt wird und daß an der vorderen Stirnseite 6, die an den Kollektor anliegt, eine entsprechende Schrägung eingeschliffen wird. Diese Schrägung kann auch von vornherein an der neuen Kohle 3 vorgesehen sein. Damit erhält die Kohle insgesamt einen parallelogrammförmigen Längsschnitt.

Die Kohle wird im Köcher gekippt, so daß die Kante zwischen der vorderen bzw. hinteren Stirnfläche und der oberen bzw. unteren Seite an die Innenwände des Köchers anschlagen. Dies führt zu einer zusätzlichen Klemmkraft, die dazu führt, daß das Flattern der Kohle im Köcher unterbunden wird.

### Bezugszeichenliste

- 1: Kollektor
- 2: Köcher
- 3: Kohle
- 4: Längsachse
- 5: Drehachse
- 6: vordere Stirnfläche
- 7: hintere Stirnfläche
- 8: Feder
- 9: Abschluß
- 10: Lamellen
- 11: Schlitze
- 12: Kohlenhalterplatte
- 31: Oberfläche
- 32: Litze
- 33: Zylinderache
- 34: Senkrechte
- 35,35': Seitenkanten
- 36: Kante
- 37,37': schräge Flächen
- 40: Begrenzungskante
- 41: Seitenwand

## Patentansprüche

1. Kohlebürste (3) für einen Elektromotor, die stabförmig ausgebildet ist und in einem Schnitt entlang ihrer Längsachse rechteckig ist, wobei der Stab an einem Ende durch eine vorderen Stirnfläche (6), die an einen Kollektor (1) anlegbar ist, und an seinem anderen Ende durch eine hintere Stirnfläche (7), an die eine Feder abstützbar ist, begrenzt ist, wobei die äußere Kontur eines Schnitts senkrecht zur Längsachse der Kohlebürste (3) nahe der vorderen Stirnfläche (6) und die Stirnfläche selbst trapezförmig sind, dadurch **gekennzeichnet,** daß ein weiterer Schnitt senkrecht zur Längsachse der Kohlebürste (3) im Bereich der hinteren Stirnfläche (7) rechteckig bzw. quadratisch ist und daß die schrägen Seiten des Trapezes von den Seitenkanten (35,35') der Seitenflächen (30,30') der Bürste (3) durch Abschrägungen (37,37') gebildet werden.

2. Kohlebürste nach Anspruch 1 dadurch **gekennzeichnet**, daß die abgeschrägten Seitenkanten (35, 35') des Trapezes einen Winkel mit den geraden Seitenflächen von ca. 10 bis 15° einschließen.

3. Kohlebürste nach Anspruch 1 dadurch **gekennzeichnet,** daß die hintere Stirnfläche (7) in Längsrichtung der Kohlebürste (3) geneigt ist.

4. Kohlebürste nach Anspruch 1 dadurch **gekennzeichnet,** daß der Längsschnitt durch die Kohle die Form eines Parallelogramms hat.

5. Kohlebürste nach Anspruch 1 dadurch **gekennzeichnet,** daß die vordere Stirnfläche (6) zylindrisch geformt ist, wobei die Achse der Zylinderkontur gegenüber einer Senkrechten (34) zur oberen bzw. unteren Fläche der Kohlebürste gekippt ist.

## Claims

1. A carbon brush (3) for an electric motor, which carbon brush has a bar-shaped design and a rectangular cross-section, on one of its ends the bar being limited by a front face (6) abuttable on a collector (1) and, on its other end, by a rear face (7) whereon a spring can be supported, the outer contour of a cross-section which is vertical to the longitudinal axis of the carbon brush (3) being trapezoidal near the front face (6) and the face itself being trapezoidal,
**characterized** in that another cross-section which is vertical to the longitudinal axis of the carbon brush (3) is rectangular or square, respectively, in the area of the rear face (7), and in that the bevelled sides of the trapezium are formed by the side edges (35, 35') of the side surfaces (30, 30') of the brush (3) by sloping surfaces (37, 37').

2. A carbon brush as claimed in claim 1,
**characterized** in that the bevelled side edges (35, 35') of the trapezium and the straight side surfaces enclose an angle of approximately 10 to 15°.

3. A carbon brush as claimed in claim 1,
**characterized** in that the rear face (7) is inclined in the longitudinal direction of the carbon brush (3).

4. A carbon brush as claimed in claim 1,
**characterized** in that the longitudinal cross-section taken through the carbon brush has the shape of a parallelogram.

5. A carbon brush as claimed in claim 1,
**characterized** in that the front face (6) has a cylindrical shape, with the axis of the cylinder contour being tilted to a perpendicular (34) towards respectively the top and bottom surfaces of the carbon brush.

## Revendications

1. Balai en charbon (3) pour moteur électrique, qui est en forme de barreau et est rectangulaire suivant une coupe le long de son axe longitudinal, le barreau étant limité à une extrémité par une surface frontale avant (6), qui est applicable sur un collecteur (1), et à son autre extrémité par une surface frontale arrière (7) sur laquelle un ressort peut prendre appui, le contour extérieur d'une coupe perpendiculaire à l'axe longitudinal du balai en charbon (3) au voisinage de la surface frontale avant (6) et la surface frontale elle-même étant trapézoïdaux, caractérisé en ce qu'une autre coupe perpendiculaire à l'axe longitudinal du balai en charbon (3) dans la zone de la surface frontale arrière (7) est rectangulaire ou carrée et en ce que les côtés obliques du trapèze des arêtes latérales (35, 35') des surfaces latérales (30, 30') du balai (3) sont formés par des biseaux (37, 37').

2. Balai en charbon suivant la revendication 1, caractérisé en ce que les arêtes latérales biseautées (35, 35') du trapèze font un angle d'environ 10 à 15° avec les surfaces latérales droites.

3. Balai en charbon suivant la revendication 1, caractérisé en ce que la surface frontale arrière (7) est inclinée suivant la direction longitudinale du balai en charbon (3).

4. Balai en charbon suivant la revendication 1, caractérisé en ce que la coupe longitudinale du balai a la forme d'un parallélogramme.

5. Balai en charbon suivant la revendication 1, caractérisé en ce que la surface frontale avant (6) a une forme cylindrique, l'axe du contour cylindrique étant basculé par rapport à une perpendiculaire (34) à la surface supérieure ou inférieure du balai en charbon.
